# EUROPÄISCHE PATENTANMELDUNG

(11) **EP 1 491 254 A2**
(43) Veröffentlichungstag der Anmeldung: **29.12.2004**
(21) Anmeldenummer: 04014426.3
(22) Anmeldetag: 19.06.2004
(51) Int. Cl.: B01J 19/00, B01L 3/02

(54) **Verfahren und Beschichtungsvorrichtung zum Herstellen eines Microarrays**

(30) Priorität: 25.06.2003 DE 10328730
(71) Anmelder: Micronas GmbH, 79108 Freiburg (DE); Micronas Holding GmbH, 79108 Freiburg (DE)
(72) Erfinder: Lehmann, Mirko, Dr., 70102 Freiburg (DE)
(74) Vertreter: Huwer, Andreas, Dr.-Ing.

(57) **Zusammenfassung**

Bei einem Verfahren zum Herstellen eines Microarrays (1) werden Oberflächenbereiche (6) eines Trägers (2) mit unterschiedlichen, wenigstens einen Beschichtungsstoff enthaltenden wässrigen Lösungen (16) in Kontakt gebracht. Für die einzelnen Oberflächenbereiche (6) wird jeweils ein saugfähiges Substrat (15) bereitgestellt und mit der mit dem betreffenden Oberflächenbereich (6) in Kontakt zubringenden Lösung (16) befüllt. Danach wird das Substrat (15) jeweils zum Bedrucken des Oberflächen bereichs (6) mit dem mindestens einen in der Lösung (16) enthaltenen Beschichtungsstoff mit dem betreffenden Oberflächenbereich (6) in Kontakt gebracht.

## Beschreibung

Die Erfindung betrifft ein Verfahren zum Herstellen eines Microarrays, wobei Oberflächenbereiche eines Trägers mit unterschiedlichen, wenigstens einen Beschichtungsstoff enthaltenden wässrigen Lösungen in Kontakt gebracht werden. Außerdem bezieht sich die Erfindung auf eine Vorrichtung zum Versehen eines Trägers für ein Mikroarray mit Beschichtungsstoffen beinhaltenden wässrigen Lösungen.

Ein derartiges Verfahren zum Herstellen eines Microarrays und eine Vorrichtung zum Beschichten eines Trägers eines Mikroarrays sind aus DE 101 32 761 A1 bekannt. Dabei wird als Träger eine planare Glasplatte verwendet, deren Oberfläche derart strukturiert wird, dass sie hydrophobe und hydrophile Beschichtungsbereiche aufweist. Danach werden auf die hydrophilen Oberflächenbereiche mit Hilfe eines Dispensers wässrige Proben mit kleinen Volumina im Bereich von Piko- bis Nanolitern aufgebracht. Zum Positionieren der hydrophilen Oberflächenbereiche unter dem Dispenser wird die Glasplatte relativ zum Dispenser bewegt. Der Aufbau des Dispensers ist in der Offenlegungsschrift nicht näher offenbart. In der Praxis ist es jedoch üblich, zum Auftragen biologischer oder biochemischer Proben eine Nanoliterpipette zu verwenden, welche eine mit der wässrigen Lösung befüllte Kapillare aufweist, die an ihrem einen Ende eine Abgabeöffnung und an ihrem anderen Ende einen piezoelektrischen Aktuator aufweist, mit dessen Hilfe die in der Kapillare befindliche Lösungen zu der Abgabeöffnung gefördert und dort in Form eines Mikrotropfens abgegeben werden kann. Eine derartige Nanoliterpipette ist beispielsweise aus T. Vo-Dinh et al., DNA Biochip Using a Phototransistor Integrated Circuit, Analytical Chemistry, Vol. 71, No. 2 (15. Januar 1999) bekannt. Die Nanoliterpipette hat jedoch den Nachteil, dass der Mikrotropfen beim Tropfenabriss an der Abgabeöffnung leicht seitlich abgelenkt werden kann. Dabei kann es vorkommen, dass der Mikrotropfen neben dem mit der wässrigen Lösung zu beschichtenden Oberflächenbereich des Trägers auftrifft und sich mit einer von der wässrigen Lösung unterscheidenden, auf einen benachbarten Oberflächenbereich des Träger aufgebrachten oder noch aufzubringenden weiteren wässrigen Lösung vermischt. Die Gefahr einer derartigen Vermischung ist insbesondere dann gegeben, wenn die einzelnen Beschichtungsbereiche dicht neben einander angeordnet sind, damit auf einen Träger mit kompakten Abmessungen möglichst viele Felder mit unterschiedlichen Beschichtungen aufgebracht werden können. Wenn der Träger aber nur an einer einzigen Stelle falsch beschichtet ist, ist das gesamte Microarray unbrauchbar.

Es besteht deshalb die Aufgabe, ein Verfahren und eine Vorrichtung der eingangs genannten Art zu schaffen, die ein einfaches, schnelles und prozesssicheres Aufbringen der Beschichtungsbereiche auf den Träger ermöglicht.

Diese Aufgabe wird bezüglich des Verfahrens dadurch gelöst, dass für die einzelnen Oberflächenbereiche jeweils ein saugfähiges Substrat bereitgestellt und mit der mit dem betreffenden Oberflächenbereich in Kontakt zubringenden Lösung befüllt wird, und dass das Substrat danach jeweils zum Bedrucken des Oberflächenbereichs mit dem mindestens einen in der Lösung enthaltenen Beschichtungsstoff mit dem betreffenden Oberflächenbereich in Kontakt gebracht wird.

Die Oberflächenbereiche werden also mit einem Tampondruckverfahren bedruckt, was ein einfaches und schnelles Aufbringen der Lösungen auf den Träger ermöglicht. Dabei können die Substrate als Stempelkissen ausgebildet sein, welche die Lösungen aufnehmen und beim Kontaktieren der Oberflächenbereiche auf diese übertragen. Da das Substrat beim Bedruckungsvorgang mit der Oberfläche des Trägers in Berührung gerät, kann die wässrige Lösung mit großer Präzision an der Berührungsstelle auf dem Träger positioniert werden. Das Verfahren ermöglicht somit auch bei kleinen Abmessungen der Oberflächenbereiche ein prozesssicheres und positionsgenaues Aufbringen der Lösungen auf den Träger. Nachdem die Lösungen auf die Oberflächenbereiche aufgebracht wurden, bindet der Beschichtungsstoffjeweils an den Oberflächenbereich. Das in der Lösung enthaltene Wasser kann danach von dem Oberflächenbereich entfernt werden, beispielsweise durch Abspülen.

Die in den Lösungen enthaltenen Beschichtungsstoffe sind bevorzugt Biomoleküle, insbesondere Nukleinsäuren oder Derivate davon (DNA, RNA, PNA, LNA, Oligonukleotide, Plasmide, Chromosomen), Peptide, Proteine (Enzym, Protein, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und/oder Lipide. Das Verfahren ermöglicht es, derartige Biomoleküle allein mit Hilfe von Wasser und somit ohne die Verwendung chemischer Substanzen auf der Oberfläche des Trägers zu immobilisieren. Die auf die Oberfläche des Trägers aufzubringenden Beschichtungsstoffe können aber auch wasserlösliche organische und/oder anorganische chemische Substanzen sein, wie sie beispielsweise in der kombinatorischen Chemie verwendet werden.

Bei einer vorteilhaften Ausgestaltung des Verfahrens wird die Oberfläche des Trägers derart strukturiert, dass hydrophile Oberflächenbereiche durch mindestens einen hydrophoben Oberflächenbereich voneinander getrennt sind, wobei die mit den Lösungen befüllten saugfähigen Substrate danach mit den hydrophilen Oberflächenbereichen in Kontakt gebracht werden. Die hydrophilen Oberflächenbereiche des Trägers ermöglichen auch bei einem kleinen Oberflächenbereich eine gute Benetzung mit den wässrigen Lösungen. Der mindestens eine zwischen den hydrophilen Oberflächenbereichen angeordnete hydrophobe Oberflächenbereich bildet dabei eine Barriere für die Lösungen, die ein Verlaufen einer mit einem hydrophilen Oberflächenbereich in Kontakt gebrachten Lösung in einen zu diesem Oberflächenbereich benachbarten hydrophilen Oberflächenbereich verhindert.

Bei einer vorteilhaften Ausführungsform des Verfahrens wird zum Strukturieren der Oberfläche eine hydrophobe Schicht auf die Oberfläche des Trägers aufgebracht, wobei die hydrophobe Schicht danach mit einem photoempfindlichen Lack beschichtet wird, wobei der Lack durch Bestrahlung maskiert und an den Stellen, an denen später die hydrophilen Oberflächenbereiche angeordnet sein sollen, entfernt wird, wobei die so freigelegten Bereiche der hydrophoben Schicht und die verbliebenen Bereiche des Lacks vorzugsweise durch Plasmaätzen hydrophil aktiviert werden, und wobei danach der Lack entfernt und die darunter befindlichen Bereiche hydrophoben Bereiche freigelegt werden. Dabei kann die hydrophobe Schicht eine Polyimid-Schicht sein. Der Lack wird vorzugsweise durch Ätzen an den belichteten Stellen von dem Träger entfernt. Die Oberfläche des Trägers kann also mit in der Halbleiterfertigung verwendeten Standardprozessen auf einfache Weise mit den erfindungsgemäßen hydrophoben und hydrophilen Oberflächenbereichen strukturiert werden.

Bei einer anderen vorteilhaften Ausgestaltung des Verfahrens wird zum Strukturieren der Oberfläche eine hydrophile Schicht auf die Oberfläche des Trägers aufgebracht, wobei die hydrophile Schicht danach mit einem photoempfindlichen Lack beschichtet wird, wobei der Lack durch Bestrahlung maskiert und an den Stellen, an denen später die hydrophoben Oberflächenbereiche angeordnet sein sollen, entfernt wird, wobei auf die so freigelegten Bereiche der hydrophilen Schicht und die verbliebenen Bereiche des Lacks eine hydrophobe Schicht aufgebracht wird, und wobei danach der Lack entfernt und die darunter befindliche Bereiche der hydrophilen Schicht freigelegt werden. Die hydrophile Schicht kann bei einem mittels eines CMOS-Prozesses aus einem Halbleiterwerkstoff hergestellten Trägers eine Silizium-Dioxid-Schicht (SiO₂) und die hydrophobe Schicht eine Silizium-Nitrit-Schicht (Si₃N₄) Schicht sein.

Bei einer anderen zweckmäßigen Ausgestaltung des Verfahrens wird zum Strukturieren der Oberfläche eine hydrophobe Schicht auf die Oberfläche des Trägers aufgebracht, wobei auf die hydrophobe Schicht eine photopolymerisierbare Schicht aufgebracht wird, und wobei diese Schicht durch Maskierung mit optischer Strahlung an den Stellen zu einer hydrophilen Polymerschicht polymerisiert bzw. aufpolymerisiert wird, an denen die hydrophilen Oberflächenbereiche sein sollen. Auch bei diesem Verfahren kann der Träger auf einfache Weise durch optisches Maskieren strukturiert werden. Als hydrophobe Schicht wird vorzugsweise eine Schicht aus organisch hydrophoben Molekülen auf die Oberfläche des Trägers aufgetragen, beispielsweise eine Polyimidschicht.

Selbstverständlich ist es aber auch möglich, dass zum Strukturieren der Oberfläche eine hydrophile Schicht auf die Oberfläche des Trägers aufgebracht wird, dass auf die hydrophile Schicht eine photopolymerisierbare Schicht aufgebracht wird, und dass diese Schicht durch Maskierung mit optischer Strahlung an den Stellen zu einer hydrophoben Polymerschicht polymerisiert bzw. aufpolymerisiert wird, an denen die hydrophoben Oberflächenbereiche sein sollen.

Besonders vorteilhaft ist, wenn in die Oberfläche einer Trägerplatte an Stellen, die den Stellen entsprechen, an denen die hydrophilen Oberflächenbereiche des Trägers angeordnet sind, Öffnungen eingebracht werden, wenn die Substrate derart in diesen Öffnungen angeordnet werden, dass sie jeweils mit einem Teilbereich bis über die Oberfläche der Trägerplatte aus der Öffnung vorstehen, und wenn zum Bedrucken der hydrophilen Oberflächenbereiche des Trägers die Trägerplatte und der Träger derart relativ zueinander positioniert werden, dass die vorstehenden Bereiche der Substrate jeweils mit einem ihnen zugeordneten hydrophilen Oberflächenbereich des Trägers in Kontakt geraten. Es wird also ein Stempel oder eine Printplatte hergestellt, der (die) mehrere an einer Trägerplatte angeordnete Stempelkissen aufweist, deren Anzahl vorzugsweise der Anzahl der hydrophilen Oberflächenbereiche des Trägers entspricht. Mit Hilfe dieses Stempels oder dieser Printplatte werden mehrere und vorzugsweise alle hydrophilen Oberflächenbereiche gleichzeitig mit den ihnen jeweils zugeordneten Lösungen in Kontakt gebracht. Die Substrate können mit Standardverfahren mit den Lösungen befüllt werden, beispielsweise durch Pipetieren. Das Verfahren ermöglicht eine einfache, kostengünstige und schnelle Serienfertigung von Microarrays.

Vorzugsweise werden die Öffnungen der Trägerplatte zum Einbringen der Substrate mit einem polymerisierbaren Gemisch befüllt, wobei danach das Gemisch aufpolymerisiert und vorzugsweise kreuzvernetzt wird. Das Gemisch kann Bismethylacrylamid enthalten. Bei der Kreuzvernetzung bilden die Polymerketten des Gemischs eine wasserunlösliche dreidimensionale Netz- oder Gitterstruktur. Die polymervernetzten Substrate quellen beim Befüllen mit den wässrigen Lösungen auf, wobei sie aus den Öffnungen heraustreten und an der Oberfläche der Trägerplatte die Stempelkissen bilden, welche beim Positionieren der Trägerplatte an dem Träger mit den hydrophilen Oberflächenbereich des Trägers in Kontakt geraten.

Bei einer anderen vorteilhaften Ausführungsform der Erfindung werden die Öffnungen der Trägerplatte zum Einbringen der Substrate mit mindestens einem Monomer befüllt, wobei das Monomer danach polymerisiert wird, vorzugsweise durch Inkontaktbringen mit einem Polymerisationsinitiator. Dabei kann das Monomer Acrylamid und der Polymerisationsinitiator Amoniumpersulfat sein. Die Öffnungen können auch mit einem Gemisch aus mehreren Monomeren befüllt werden.

Vorteilhaft ist, wenn die Innenwände der Öffnungen vor dem Befüllen der Öffnungen mit dem polymerisierbaren Gemisch und/oder dem Monomer mit einem Silan beschichtet werden, das eine chemische Gruppe aufweisen kann, die geeignet ist, beim Inkontaktbringen mit dem Monomer die Polymerisation zu starten. Das Silan weist bevorzugt eine der folgenden Strukturen auf, die in WO 00/43539 A2 insbesondere auf Seite 11 näher beschrieben sind: 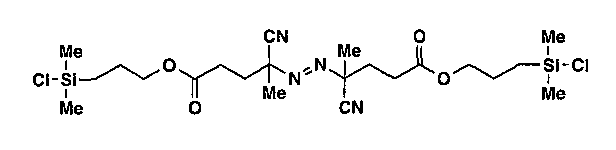 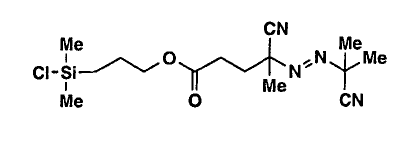 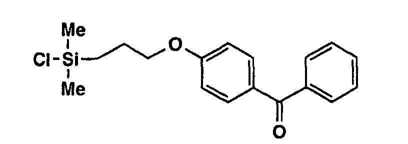 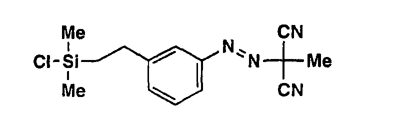 Zweckmäßigerweise wird die Trägerplatte in einem Unterdruck oder Vakuum derart in das polymerisierbare Gemisch und/oder das Monomer eingetaucht, dass dieses in die Öffnungen eindringt, wobei der Unterdruck oder das Vakuum danach entfernt wird. Auf diese Weise lassen sich sämtliche Öffnungen auf einfache Weise gleichzeitig mit dem Gemisch bzw. dem Monomer blasenfrei befüllen.

Vorteilhaft ist, wenn die Öffnungen als Durchgangsöffnungen quer zur Erstreckungsebene der Trägerplatte in diese eingebracht werden, und wenn die jeweils den mindestens einen Beschichtungsstoff enthaltenden Lösungen an der in Gebrauchsstellung dem Träger abgewandten Rückseite der Trägerplatte den Substraten zugeführt werden.

Dabei ist es sogar möglich, dass an der Rückseite der Trägerplatte Reservoirs gebildet werden, die jeweils mit einer ihnen zugeordneten Öffnung der Trägerplatte verbunden werden, und dass diese Reservoirs mit den den mindestens einen Beschichtungsstoff enthaltenden Lösungen befüllt werden. Mit der aus der Trägerplatte, den Substraten und den Reservoirs gebildeten Bedruckungsvorrichtung können dann nacheinander eine Vielzahl von Trägern bedruckt werden. Die Reservoirs sind vorzugsweise direkt über den Öffnungen an der Oberseite der Trägerplatte angeordnet, so dass die beim Drucken von den Substraten auf den Träger übertragenen Mengen der Lösungen schwerkraftunterstützt aus den Reservoirs in die Substrate nachfließen können.

Bei einer anderen vorteilhaften Ausführungsform der Erfindung werden die Öffnungen als Sacklöcher in die Trägerplatte eingebracht. Die in den Substraten enthaltenen Lösungen können dann nicht so leicht aus den Öffnungen verdunsten.

Bezüglich der Vorrichtung wird die vorstehend genannte Aufgabe dadurch gelöst, dass sie eine Trägerplatte mit Öffnungen aufweist, in denen jeweils ein für wässrige Lösungen saugfähiges Substrat angeordnet ist, das zur Bildung eines Stempelkissens mit einem Teilbereich aus der Öffnung herausragt und dass die Substrate mit unterschiedlichen, wenigstens einen Beschichtungsstoff enthaltenden wässrigen Lösungen befüllt sind..

In vorteilhafter Weise können mit Hilfe dieser Vorrichtung eine Vielzahl von unterschiedlichen Lösungen gleichzeitig auf die einzelnen Oberflächenbereiche eines Trägers aufgebracht werden, indem die Trägerplatte derart an dem Träger positioniert wird, dass die Stempelkissen jeweils an einen ihnen zugeordneten Oberflächenbereich des Trägers angedrückt werden und die Oberflächenbereiche mit den in den Substraten gespeicherten Lösungen benetzen. Dabei sind die Oberflächenbereiche des der Vorrichtung zugeordneten Trägers vorzugsweise hydrophil ausgebildet und durch hydrophobe Oberflächenbereiche voneinander beabstandet.

Vorteilhaft ist, wenn die in den Öffnungen angeordneten Substrate in wässriger Lösung quellbare Polymersubstrate sind. Die Polymersubstrate können dann auf einfache Weise in einem Lösungsmittel gelöst in die Öffnungen eingebracht werden, um das darin enthaltene Polymer danach zu vernetzen. Beim anschließenden Befüllen der Polymersubstrate mit den wässrigen Lösungen quellen die Polymersubstrate auf, wobei jeweils ein Teilbereich des Substrats aus den Öffnungen verdrängt wird und das über die Oberfläche der Trägerplatte überstehende Stempelkissen bildet.

Bei einer bevorzugten Ausführungsform der Erfindung sind die Innenwände der Öffnungen jeweils mit einer Silanschicht beschichtet, die mit dem in der Öffnung befindlichen quellbaren Polymer in Kontakt steht. Dadurch wird ein gutes Anhaften der Substrate an der Trägerplatte ermöglicht. Besonders bevorzugt ist, wenn das Silan und das Polymer kovalent verbunden sind.

Ein gutes Anhaften der Substrate an den Innenwänden der Öffnungen kann aber auch dadurch erreicht werden, dass die Innenwände der Öffnungen Vor- und/oder Rücksprünge aufweisen, welche die Substrate hintergreifen. Dabei können die Vorund/oder Rücksprünge nach dem aus DE 199 07 164 C2 bekannten Verfahren hergestellt werden.

Vorteilhaft ist, wenn die Öffnungen als Durchgangsöffnungen ausgebildet sind, welche die Trägerplatte quer zu ihrer Erstreckungsebene durchsetzten, wenn an dem einen Ende der einzelnen Öffnungen jeweils der über die Oberfläche der Trägerplatte vorstehende Teilbereich des Substrats angeordnet ist und wenn das andere Ende der Öffnungen jeweils mit einem der Öffnung zugeordneten Reservoir zur Aufnahme einer Lösung verbunden ist. Dabei weisen die Reservoirs vorzugsweise einen größeren Querschnitt auf als die Öffnungen und setzen diese in gerader Verlängerung fort, so dass die Reservoirs von der den Stempelkissen abgewandten Rückseite der Trägerplatte beispielsweise mit einer Pipette auf einfache Weise befüllt werden können.

Vorzugsweise besteht die Trägerplatte im Wesentlichen aus einem Halbleiterwerkstoff, insbesondere aus Silizium, und hat an ihrer Oberfläche vorzugsweise eine Mikrofasermembran, welche die hydrophilen Oberflächenbereiche und den mindestens einen hydrophoben Oberflächenbereich aufweist. Bei der Fertigung der Vorrichtung können dann die Öffnungen für die Aufnahme der Substrate mit Standardprozessen der Halbleiterfertigung mit großer Präzision in den Halbleiterwerkstoff eingebracht werden.

Nachfolgend sind Ausführungsbeispiele der Erfindung anhand der Zeichnung näher erläutert. Es zeigen zum Teil stärker schematisiert:
- Fig. 1 bis 4: die einzelnen Verfahrensschritte bei der Strukturierung eines Trägers mit matrixförmig angeordneten hydrophilen Oberflächenbereichen, die durch einen hydrophoben Oberflächenbereich voneinander getrennt sind,
- Fig. 5: einen Querschnitt durch eine Trägerplatte, die matrixförmig angeordnete Durchgangsöffnungen aufweist, die jeweils mit einem Reservoir verbunden sind,
- Fig. 6: die in Fig. 5 gezeigte Trägerplatte nach dem Befüllen der Öffnungen mit saugfähigen Substraten,
- Fig. 7: die in Fig. 6 gezeigte Vorrichtung nach dem Befüllen der Reservoire mit wässrigen Biomolekül-Lösungen,
- Fig. 8: den in Fig. 4 gezeigten Träger beim Bedrucken der hydrophilen Oberflächenbereichen mittels der in Fig. 7 gezeigten Vorrichtung,
- Fig. 9: einen Träger, dessen hydrophile Oberflächenbereiche mit unterschiedlichen Biomolekülen bedruckt sind,
- Fig. 10: einen Querschnitt durch eine Trägerplatte, die matrixförmig angeordnete Sacklöcher aufweist,
- Fig. 11: die in Fig. 11 gezeigte Trägerplatte nach dem Befüllen der Sacklöcher mit saugfähigen Substraten, und
- Fig. 12: die in Fig. 11 gezeigte Vorrichtung nach dem Befüllen der Substrate mit wässrigen Biomolekül-Lösungen.

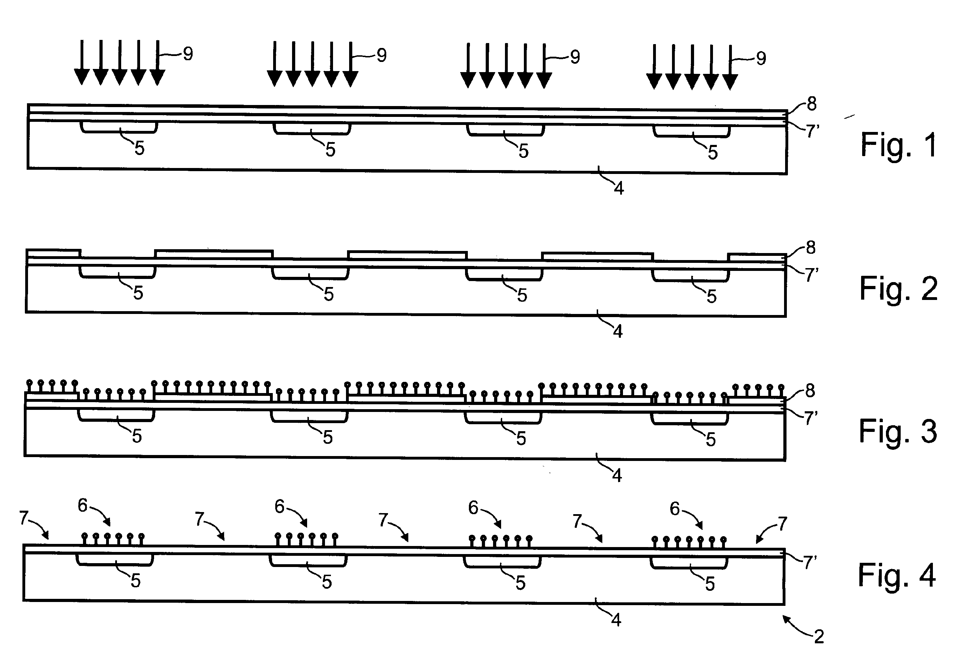

Bei einem Verfahren zum Herstellen eines Microarrays 1, bestehend aus einem Träger 2, auf dem mehrere unterschiedlich ausgebildete Beschichtungsbereiche 3 matrixförmig nebeneinander angeordnet sind, wird zunächst ein Halbleiterwafer als Grundkörper 4 für den Träger 2 bereitgestellt. In Fig. 1 ist erkennbar, dass der Grundkörper 4 in einer oberflächennahen Schicht Photodetektoren 5 aufweist, die mit Methoden der Halbleiterfertigung in den Halbleiterwerkstoff des Grundkörpers 4 integriert sind. Die Photodetektoren 5 sind über in der Zeichnung nicht näher dargestellte Leiterbahnen mit einer Auswerteeinrichtung verbunden, die ebenfalls in den Halbleiterwafer integriert sein kann.

Die Oberfläche des Grundkörpers 4 wird derart strukturiert, dass hydrophile Oberflächenbereiche 6 durch mindestens einen hydrophoben Oberflächenbereich 7 voneinander getrennt sind. Dazu wird auf den Grundkörper 4 zunächst eine hydrophobe Schicht 7', beispielsweise eine Polyimid- oder Polystyrolschicht, aufgebracht. Diese wird mit einem photoempfindlichen Lack 8 beschichtet. Danach wird der Lack 8 durch eine Maske hindurch mit optischer Strahlung 9 an den Stellen, an denen später die hydrophilen Oberflächenbereiche 6 angeordnet sein sollen, bestrahlt. Diese Stellen sind matrixförmig in mehreren Reihen und Spalten an der Oberfläche des Trägers 2 geordnet und voneinander beabstandet. Durch die Belichtung wird der Lack 8 zerstört oder in einen löslichen Lack umgewandelt, der mittels eines Lösungsmittels entfernt wird, so dass an den belichteten Stellen die hydrophoben Oberflächenbereiche 6 freigelegt werden (Fig. 2). In einem weiteren Verfahrensschritt werden die so freigelegten Bereiche der hydrophoben Schicht 7' und die verbliebenen Bereiche des Lacks 2 durch Plasmaätzen hydrophil aktiviert (Fig. 3). Danach wird der Lack vollständig entfernt, so dass die darunter befindlichen Bereiche hydrophoben Bereiche 7 freigelegt werden. An der Oberfläche des Trägers 2 sind nun matrixförmig ein Vielzahl von hydrophilen Oberflächenbereichen 6 angeordnet, die durch einen sie umgrenzenden hydrophoben Oberflächenbereich 7 voneinander beabstandet sind. Dabei bildet der hydrophobe Oberflächenbereich 7 eine Barriere für auf die hydrophilen Oberflächenbereiche 6 aufzudruckende wässrige Lösungen 16.

Zum Aufbringen der Lösungen 16 auf die hydrophilen Oberflächenbereiche 6 wird eine im Ganzen mit 10 bezeichnete Vorrichtung hergestellt. Dazu werden zunächst in eine aus Silizium bestehende Trägerplatte 11 eine Vielzahl von matrixförmig in mehreren Reihen und Spalten angeordneten Öffnungen 12 eingebracht, deren Längserstreckung jeweils etwa rechtwinklig zur Erstreckungsebene der Trägerplatte 11 verläuft. Die Anordnung der Öffnungen 12 entspricht der Anordnung der hydrophilen Oberflächenbereiche 6 des zu bedruckenden Trägers 2. Das Einbringen der Öffnungen 12 kann beispielsweise durch Aufbringen einer ätzbeständigen Maske, die an den Stellen, an denen die Öffnungen 12 sein sollen, Unterbrechungen aufweist, und anschließendes Inkontaktbringen der Trägerplatte 11 mit einem Ätzmittel erfolgen.

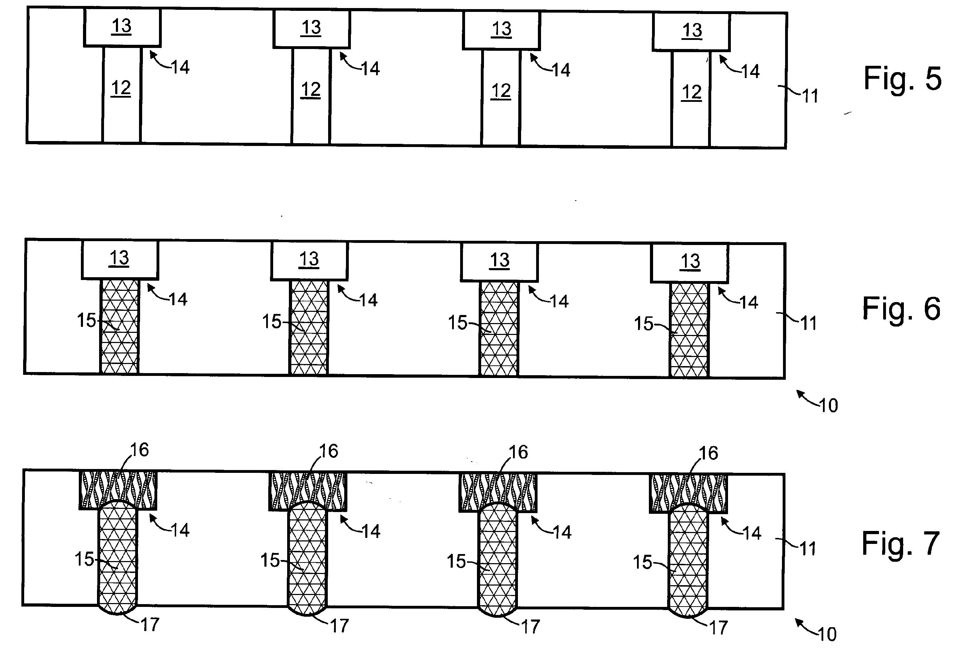

Bei dem Ausführungsbeispiel nach Fig. 1 werden zusätzlich Reservoirs 13 in die Trägerplatte 11 eingebracht, die in gerader Verlängerung der Öffnungen 12 angeordnet sind und diese fortsetzten. In Fig. 5 ist erkennbar, dass die aus den Öffnungen 12 und den Reservoirs 13 gebildeten Lochungen die Trägerplatte 11 durchsetzen. Selbstverständlich ist aber auch eine umgekehrte Vorgehensweise denkbar, bei welcher zuerst die Reservoirs 13 und danach die Öffnungen 12 in die Trägerplatte 11 eingebracht werden. Die Innenwände der Öffnungen 12 werden mit einem 4,4'-Azobis-(4-Cyano Pentanoinsäure (3'-Chlorodimethylsilyl) Propyl Ester) oder einem entsprechenden mono- oder multifunktionalen Chlor- oder Alkoxy-Silan beschichtet.

Die Reservoirs 13 weisen einen größeren Querschnitt auf als die Öffnungen 12. In Fig. 5 ist deutlich erkennbar, dass an der Übergangsstelle von den Öffnungen 12 zu den Reservoirs 1 3 jeweils eine Stufe oder ein Absatz 14 angeordnet ist, an welcher (welchem) sich die lichte Weite der Lochungen, ausgehend von der Öffnung 12 zu dem Reservoir 13 hin, erweitert.

Die Öffnungen 12 werden nun mit einer Lösung befüllt, die ein polymerisierbares Gemisch und einen Polymerisationsstarter, vorzugsweise 4,4'-Azobis-(4-Cyano Pentanoinsäure (3'-Chlorodimethylsilyl) Propyl Ester oder ein entsprechendes monooder multifunktionales Chlor- oder Alkoxy-Silan, enthält. Die Lösung kann als polymerisierbares Gemisch Acrylamid enthaften, das in Wasser gelöst ist. Die Trägerplatte 11 wird in einem Vakuum mit den Öffnungen 12 nach unten und den Reservoirs 13 nach oben weisend derart in die Lösung eingetaucht, dass der Oberflächenspiegel der Lösung etwa in Höhe des Absatzes 14 angeordnet ist. Danach wird das in der in den Öffnungen 12 befindlichen Lösung enthaltene polymerisierbare Gemisch mit Hilfe des Polymerisationsstarters aufpolymerisiert, wobei das Polymer vernetzt und ein saugfähiges Substrat 15 bildet. Beim Vernetzen bindet das Polymer jeweils an die auf der Innenwand der Öffnung 12 befindliche Silanschicht an.

In einem weiteren Schritt werden die Reservoirs 13 mit wässrigen Lösungen 16 befüllt (Fig. 7), die unterschiedliche Biomoleküle, wie z.B. DNA-Stränge enthalten, mit denen die hydrophilen Oberflächenbereiche 6 des Trägers 2 beschichtet werden sollen. Die wässrigen Lösungen 16 können beispielsweise mit einer Pipette in die Reservoirs 13 eingefüllt werden. Die Lösungen 16 kommen dabei mit dem ihnen jeweils zugeordneten Substrat 15 in Berührung und werden von diesem aufgesaugt. Dabei quellen die Substrate 15 auf und vergrößern ihr Volumen derart, dass sie jeweils an dem von dem ihnen zugeordneten Reservoir 13 entfernten Ende der Öffnung 12 aus dieser austreten und Vorsprünge bilden, die als Stempelkissen 17 dienen.

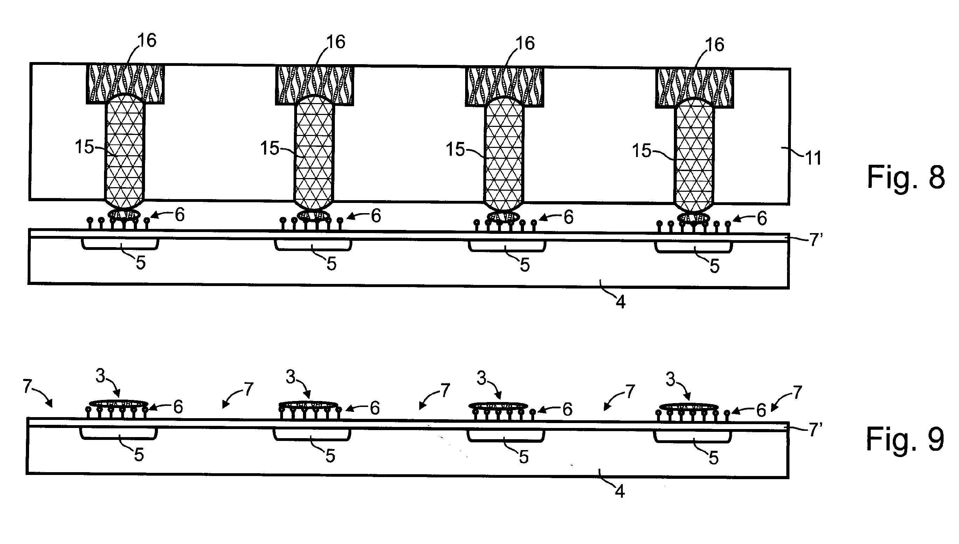

Die Trägerplatte 11 und der Träger 2 werden zum Bedrucken der hydrophilen Oberflächenbereiche 6 des Trägers 2 derart relativ zueinander positioniert, dass die Stempelkissen 17 jeweils mit einem ihnen zugeordneten hydrophilen Oberflächenbereich 6 des Trägers 2 in Kontakt geraten. Dabei wird der hydrophile Oberflächenbereich 6 mit der in dem Substrat 15 gespeicherten wässrigen Lösung 16 benetzt. In Fig. 8 erkennbar ist, dass jeweils ein kleiner Tropfen der wässrigen Lösung 16 von dem Substrat 15 auf den hydrophilen Oberflächenbereich 6 übertragen wird. Die in der Lösung enthaltenen Biomoleküle binden an die hydrophilen Oberflächenbereiche 6 an, woraufhin das in der Lösung enthaltene Wasser von dem hydrophilen Oberflächenbereich 6 abgespült wird (Fig. 9).

Die einzelnen Beschichtungsbereich 3 bilden Rezeptoren, die jeweils für einen bestimmten Liganden bindungsspezifisch sind und beim Kontaktieren des entsprechenden Liganden einen Rezeptor-Ligandenkomplex bilden. Das Bindungsereignis kann in an sich bekannter Weise mittels Lumineszenzstrahlung, die mit Hilfe der direkt unter den Beschichtungsbereichen 3 angeordneten Photodetektoren 5 gemessen werden kann, nachgewiesen werden.

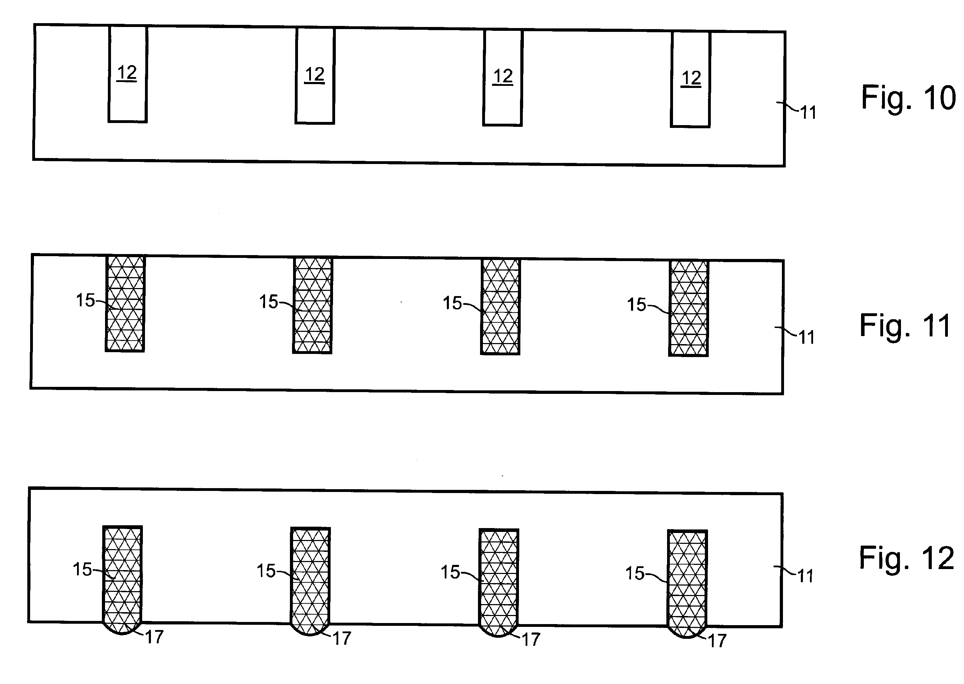

In den Fig. 10 bis 12 sind die einzelnen Schritte für die Herstellung eines weiteren Ausführungsbeispiels einer Vorrichtung 10 zum Bedrucken der hydrophilen Oberflächenbereiche 6 des Trägers 2 gezeigt. Zunächst werden die Öffnungen 12 als Sacklöcher in die Trägerplatte 11 eingebracht, beispielsweise durch Aufbringen einer ätzbeständigen Maske und anschließendes Inkontaktbringen der Trägerplatte 11 mit einem Ätzmittel. Die Anordnung der Öffnungen 12 entspricht der Anordnung der hydrophilen Oberflächenbereiche 6 des zu bedruckenden Trägers 2.

Danach werden die Öffnungen 12 mit einer Polymerlösung befüllt. Die Trägerplatte 11 wird dazu in einem Vakuum in die Polymerlösung eingetaucht und danach wird das Vakuum entfernt, so dass die Polymerlösung durch den Atmosphärendruck in die Öffnungen 12 gedrückt wird. Anschließend wird ein in der in den Öffnungen 12 befindliche Polymerlösung enthaltenes Polymer aufpolymerisiert, wobei es vernetzt und ein saugfähiges Substrat 15 bildet (Fig. 11). Die Innenwand der Öffnung 12 kann mit einem Silan beschichtet sein, an dem das Polymer anbindet. Dabei entsteht ein sogenanntes Pfropf-Polymer (Grafting-Prozess). Die Substrate 15 werden mit den einzelnen wässrigen Lösungen 16 befüllt, wobei die Substrate 15 aufquellen und mit einem ein Stempelkissen 17 bildenden Teilbereich aus der Öffnung 12 heraustreten. Mit der so erhaltenen Vorrichtung 10 werden die hydrophilen Oberflächenbereiche 6 des Trägers 2 bedruckt.

## Patentansprüche

1. Verfahren zum Herstellen eines Microarrays (1 ), wobei Oberflächenbereiche (6) eines Trägers (2) mit unterschiedlichen, wenigstens einen Beschichtungsstoff enthaltenden wässrigen Lösungen (16) in Kontakt gebracht werden, **dadurch gekennzeichnet, dass** für die einzelnen Oberflächenbereiche (6) jeweils ein saugfähiges Substrat (15) bereitgestellt und mit der mit dem betreffenden Oberflächenbereich (6) in Kontakt zubringenden Lösung (16) befüllt wird, und dass das Substrat (15) danach jeweils zum Bedrucken des Oberflächenbereichs (6) mit dem mindestens einen in der Lösung (16) enthaltenen Beschichtungsstoff mit dem betreffenden Oberflächenbereich (6) in Kontakt gebracht wird.

2. Verfahren nach Anspruch 1, **dadurch gekennzeichnet, dass** die Oberfläche des Trägers (2) derart strukturiert wird, dass hydrophile Oberflächenbereiche (6) durch mindestens einen hydrophoben Oberflächenbereich (7) voneinander getrennt sind, und dass die mit den Lösungen (16) befüllten saugfähigen Substrate (15) danach mit den hydrophilen Oberflächenbereichen (6) in Kontakt gebracht werden.

3. Verfahren nach Anspruch 1 oder 2, **dadurch gekennzeichnet, dass** zum Strukturieren der Oberfläche eine hydrophile Schicht auf die Oberfläche des Trägers (2) aufgebracht wird, dass die hydrophile Schicht danach mit einem photoempfindlichen Lack beschichtet wird, dass der Lack (8) durch Bestrahlung maskiert und an den Stellen, an denen später die hydrophoben Oberflächenbereiche (7) angeordnet sein sollen, entfernt wird, dass auf die so freigelegten Bereiche der hydrophilen Schicht und die verbliebenen Bereiche des Lacks (2) eine hydrophobe Schicht (7') aufgebracht wird, und dass danach der Lack durch Ätzen entfernt und die darunter befindliche Bereiche der hydrophilen Schicht freigelegt werden.

4. Verfahren nach einem der Ansprüche 1 bis 3, **dadurch gekennzeichnet, dass** in die Oberfläche einer Trägerplatte (11) an Stellen, die den Stellen entsprechen, an denen die hydrophilen Oberflächenbereiche (6) des Trägers (2) angeordnet sind, Öffnungen (12) eingebracht werden, dass die Substrate (15) derart in diesen Öffnungen (12) angeordnet werden, dass sie jeweils mit einem Teilbereich bis über die Oberfläche der Trägerplatte (11) aus der Öffnung (12) vorstehen, und dass zum Bedrucken der hydrophilen Oberflächenbereiche (6) des Trägers (2) die Trägerplatte (11) und der Träger (2) derart relativ zueinander positioniert werden, dass die vorstehenden Bereiche der Substrate (15) jeweils mit einem ihnen zugeordneten hydrophilen Oberflächenbereich (6) des Trägers (2) in Kontakt geraten.

5. Verfahren nach einem der Ansprüche 1 bis 4, **dadurch gekennzeichnet, dass** die Öffnungen (12) der Trägerplatte (11) zum Einbringen der Substrate (15) mit einem polymerisierbaren Gemisch befüllt werden, und dass danach das Gemisch aufpolymerisiert und vorzugsweise kreuzvernetzt wird.

6. Verfahren nach einem der Ansprüche 1 bis 5, **dadurch gekennzeichnet, dass** in die Öffnungen (12) der Trägerplatte (11) zum Einbringen der Substrate (15) mit mindestens einem Monomer befüllt werden, und dass das Monomer danach polymerisiert wird, vorzugsweise durch Inkontaktbringen mit einem Polymerisationsinitiator.

7. Verfahren nach einem der Ansprüche 1 bis 6, **dadurch gekennzeichnet, dass** die Innenwände der Öffnungen (12) vor dem Befüllen der Öffnungen (12) mit dem polymerisierbaren Gemisch und/oder dem Monomer mit einem Silan beschichtet werden und dass das Silan gegebenenfalls eine chemische Gruppe aufweist, die geeignet ist, beim Inkontaktbringen mit dem Monomer die Polymerisation zu starten.

8. Verfahren nach einem der Ansprüche 1 bis 7, **dadurch gekennzeichnet, dass** die Trägerplatte (11) in einem Unterdruck oder Vakuum derart in das polymerisierbare Gemisch und/oder das Monomer eingetaucht wird, dass dieses in die Öffnungen (12) eindringt, und dass der Unterdruck oder das Vakuum danach entfernt wird.

9. Vorrichtung zum Versehen eines Trägers (2) für ein Mikroarray (1) mit Beschichtungsstoffen beinhaltenden wässrigen Lösungen, **dadurch gekennzeichnet, dass** die Vorrichtung eine Trägerplatte (11) mit Öffnungen (12) aufweist, in denen jeweils ein für wässrige Lösungen (16) saugfähiges Substrat (15) angeordnet ist, das zur Bildung eines Stempelkissens mit einem Teilbereich aus der Öffnung (12) herausragt, und dass die Substrate (15) mit unterschiedlichen, wenigstens einen Beschichtungsstoff enthaltenden wässrigen Lösungen (16) befüllt sind.

10. Vorrichtung nach Anspruch 9, **dadurch gekennzeichnet, dass** die in den Öffnungen (12) angeordneten Substrate (15) in wässriger Lösung quellbare Polymersubstrate sind.

11. Vorrichtung nach Anspruch 9 oder 10, **dadurch gekennzeichnet, dass** die Innenwände der Öffnungen (12) jeweils mit einer Silanschicht beschichtet sind und dass diese Silanschicht mit dem in der Öffnung (12) befindlichen quellbaren Polymer in Kontakt steht.

12. Vorrichtung nach einem der Ansprüche 9 bis 11, **dadurch gekennzeichnet, dass** die Silanschicht eine chemische Gruppe aufweist, die beim Inkontaktbringen mit einem Monomer dessen Polymerisation startet.
